# EUROPEAN PATENT APPLICATION

(11) **EP 4 712 426 A1**
(43) Date of publication of application: **18.03.2026**
(21) Application number: 24802908.4
(22) Date of filing: 06.05.2024
(51) Int. Cl.: H04L 41/16, H04W 24/02, G06N 3/06, G06N 3/08

(54) **MODEL MANAGEMENT METHOD AND APPARATUS, AND COMMUNICATION DEVICE**

(30) Priority: 11.05.2023 CN 202310535672
(71) Applicant: Vivo Mobile Communication Co., Ltd., Dongguan, Guangdong 523863 (CN)
(72) Inventor: YANG, Ang, Dongguan, Guangdong 523863 (CN); SUN, Peng, Dongguan, Guangdong 523863 (CN)
(74) Representative: Shieldmark
(86) International application number: PCT/CN2024/091118
(87) International publication number: WO 2024/230626

(57) **Abstract**

This application discloses a model management method and apparatus, and a communication device, and relates to the field of communication technologies. The model management method in embodiments of this application includes: performing, by a first communication device, model management on a reference model, where at least a part of model parameters or at least a part of model structures of a target model are defined in the reference model, and the target model is used by the first communication device for performing a predetermined communication process.

## Description

### CROSS-REFERENCE TO RELATED APPLICATIONS

This application claims the priority to Chinese patent application No. 202310535672.1, filed with the China National Intellectual Property Administration on May 11, 2023 and entitled "MODEL MANAGEMENT METHOD AND APPARATUS, AND COMMUNICATION DEVICE", which is incorporated herein by reference in its entirety.

### TECHNICAL FIELD

This application relates to the field of communication technologies, and specifically, to a model management method and apparatus, and a communication device.

### BACKGROUND

Currently, artificial intelligence (Artificial Intelligence, AI) has been widely used in various fields. For example, integrating artificial intelligence into wireless communication networks to significantly improve technical indicators such as a throughput, a latency, and a user capacity is a key task for future wireless communication networks.

However, for a same communication process, AI models used by terminals may have various designs, and performance, complexity, and sizes of the AI models may vary greatly, causing large difficulty in AI model management and affecting communication performance.

### SUMMARY

Embodiments of this application provides a model management method and apparatus, and a communication device, which can resolve a problem of large difficulty in AI model management and ensure communication performance.

According to a first aspect, a model management method is provided, including: performing, by a first communication device, model management on a reference model, where at least a part of model parameters or at least a part of model structures of a target model are defined in the reference model, and the target model is used by the first communication device for performing a predetermined communication process.

According to a second aspect, a communication method is provided. The method includes: performing, by a second communication device, model management on a reference model, where the reference model is configured in a first communication device, at least a part of model parameters or at least a part of model structures of a target model are defined in the reference model, and the target model is used for performing a predetermined communication process.

According to a third aspect, a model management apparatus is provided, including: a model management module, configured to perform model management on a reference model, where at least a part of model parameters or at least a part of model structures of a target model are defined in the reference model, and the target model is used by a first communication device for performing a predetermined communication process.

According to a fourth aspect, a model management apparatus is provided, including: a model management module, configured to perform model management on a reference model, where the reference model is configured in a first communication device, at least a part of model parameters or at least a part of model structures of a target model are defined in the reference model, and the target model is used for performing a predetermined communication process.

According to a fifth aspect, a communication device is provided, including a processor and a memory, where the memory stores a program or instructions executable on the processor, and when the program or the instructions are executed by the processor, the steps of the method according to the first aspect or the second aspect are implemented.

According to a sixth aspect, a communication device is provided, including a processor and a communication interface, where the communication interface is coupled to the processor, and the processor is configured to run a program or instructions to implement the steps of the method according to the first aspect, or implement the steps of the method according to the second aspect.

According to a seventh aspect, a readable storage medium is provided, storing a program or instruction, where when the program or instruction is executed by a processor, the steps of the method according to the first aspect, or the steps of the method according to the second aspect are implemented.

According to an eighth aspect, an embodiment of this application provides a wireless communication system, including a first communication device and a second communication device, where the first communication device may be configured to perform the steps of the method according to the first aspect, and the second communication device may be configured to perform the steps of the method according to the second aspect.

According to a ninth aspect, a chip is provided, where the chip includes a processor and a communication interface, the communication interface is coupled to the processor, and the processor is configured to run a program or instructions to implement the steps of the method according to the first aspect, or implement the steps of the method according to the second aspect.

According to a tenth aspect, a computer program/program product is provided, where the computer program/program product is stored in a storage medium, and the computer program/program product is executed by at least one processor to implement the steps of the method according to the first aspect, or implement the steps of the method according to the second aspect.

In the embodiments of this application, the first communication device performs model management on the reference model, and the at least a part of model parameters or at least a part of model structures of the target model are defined in the reference model, where the target model is used by the first communication device for performing the predetermined communication process. Therefore, the target model for performing the predetermined communication process is managed through management on the reference model, which can resolve the problem of difficult AI model management, improve model management efficiency, and ensure communication performance.

### BRIEF DESCRIPTION OF THE DRAWINGS

FIG. 1 is a schematic structural diagram of a wireless communication system according to an exemplary embodiment of this application;
FIG. 2 is a schematic flowchart 1 of a model management method according to an exemplary embodiment of this application;
FIG. 3 is a schematic flowchart 2 of a model management method according to an exemplary embodiment of this application;
FIG. 4 is a schematic flowchart 3 of a model management method according to an exemplary embodiment of this application;
FIG. 5 is a schematic structural diagram 1 of a model management apparatus according to an exemplary embodiment of this application;
FIG. 6 is a schematic structural diagram 2 of a model management apparatus according to an exemplary embodiment of this application;
FIG. 7 is a schematic structural diagram of a communication device according to an exemplary embodiment of this application;
FIG. 8 is a schematic structural diagram of a terminal according to an exemplary embodiment of this application; and
FIG. 9 is a schematic structural diagram of a network side device according to an exemplary embodiment of this application.

### DETAILED DESCRIPTION

The following clearly describes the technical solutions in the embodiments of this application with reference to the accompanying drawings in the embodiments of this application. Apparently, the described embodiments are some of the embodiments of this application rather than all of the embodiments. All other embodiments derived by a person of ordinary skill in the art based on the embodiments of this application shall fall within the protection scope of this application.

The terms "first", "second", and the like are intended to distinguish between similar objects rather than describe a specific order. It should be understood that the terms used in such a way are interchangeable in proper circumstances, so that the embodiments of this application can be implemented in other sequences than the sequences illustrated or described herein, and the objects distinguished through "first" and "second" are generally of a same type and a quantity of objects are not limited, for example, a first object may be one or more than one. In addition, "or" in this application represents at least one of connected objects. For example, "A or B" covers three solutions: that is, solution 1: A is included and B is not included; solution 2: B is included and A is not included; and solution 3: both A and B are included. The character "/" generally indicates an "or" relationship between the associated objects.

The term "indication" in this application may be a direct indication (or an explicit indication), or may be an indirect indication (or an implicit indication). The direct indication may be understood as that a sender explicitly notifies a receiver of content such as specific information, an operation that needs to be performed, or a request result in a sent indication. The indirect indication may be understood as that the receiver determines corresponding information based on an indication sent by the sender, or performs determining and determines an operation that needs to be performed, a request result, or the like based on a determining result.

It is to be noted that the technologies described in the embodiments of this application are not limited to a long term evolution (Long Term Evolution, LTE)/LTE-advanced (LTE-Advanced, LTE-A) system, and may be further applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of this application are often used interchangeably, and the technologies described can be applied to the systems and radio technologies mentioned above, and can also be applied to other systems and radio technologies. The following exemplarily describes a new radio (New Radio, NR) system, and NR terms are used in most of the descriptions below. However, these technologies can also be applied to a system other than the NR system, for example, a 6^{th} generation (6^{th} Generation, 6G) communication system.

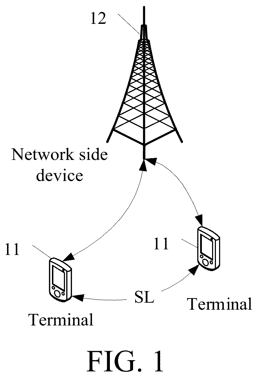

FIG. 1 shows a block diagram of a wireless communication system to which an embodiment of this application is applicable. The wireless communication system includes a terminal 11 and a network side device 12. The terminal 11 may be a terminal side device, such as a mobile phone, a tablet computer (Tablet Computer), a laptop computer (Laptop Computer), a notebook computer, a personal digital assistant (Personal Digital Assistant, PDA), a handheld computer, a netbook, an ultra-mobile personal computer (Ultra-mobile Personal Computer, UMPC), a mobile Internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), a shipborne device, pedestrian user equipment (Pedestrian User Equipment, PUE), a smart household (a home device with a wireless communication function, such as a refrigerator, a television, a washing machine, or a furniture), a game console, a personal computer (Personal Computer, PC), a teller machine, or a self-service machine. The wearable device includes: a smart watch, a smart bracelet, a smart earphone, smart glasses, smart jewelry (a smart bangle, a smart wrist chain, a smart ring, a smart necklace, a smart anklet, a smart ankle chain, and the like), a smart wristband, smart clothes, and the like. The vehicle user equipment may also be referred to as an in-vehicle terminal, an in-vehicle controller, an in-vehicle module, an in-vehicle component, an in-vehicle chip, an in-vehicle unit, or the like. It should be noted that a specific type of the terminal 11 is not limited in the embodiments of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (Node B, NB), an evolved NodeB (Evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission reception point (Transmission Reception Point, TRP), or another appropriate term in the field. Provided that the same technical effect is achieved, the base station is not limited to a specific technical term. It should be noted that only a base station in an NR system is used as an example for description in the embodiments of this application, and a specific type of the base station is not limited.

The technical solutions provided in the embodiments of this application are described in detail below with reference to the accompanying drawings through some embodiments and application scenarios thereof.

It should be noted that, based on different communication scenarios, there may be a plurality of types of first communication devices and second communication devices that are mentioned in this application. For example, when a communication scenario is a sidelink (Sidelink, SL) communication scenario, the first communication device and the second communication device may both be terminals. When the communication scenario is an uplink/a downlink, the first communication device may be a terminal and the second communication device may be a network side device or the like. This is not limited herein.

In addition, a reference model (Reference model) mentioned below may alternatively be referred to as an AI unit, an AI model, a machine learning (machine learning, ML) model, an ML unit, an AI structure, an AI function, an AI feature, a neural network, a neural network function, a neural network capability, or the like; or the reference model may refer to a processing unit that can implement a specific AI-related algorithm, formula, processing process, capability or the like; or the reference model may be a processing method, algorithm, function, module, or unit for a specific data set; or the reference model may be a processing method, algorithm, function, module, or unit running on AI/ML-related hardware such as a graphics processing unit (Graphics Processing Unit, GPU), a neural network processing unit (Neural Network Processing Unit, NPU), a tensor processing unit (Tensor Processing Unit, TPU), or an application-specific integrated circuit (Application Specific Integrated Circuits, ASIC). This is not specifically limited in this application. The specific data set includes an input, an output, or the like of the reference model.

Correspondingly, a model identifier of the reference model mentioned subsequently may be an AI model identifier, an AI structure identifier, an AI algorithm identifier, an identifier of a specific data set associated with the reference model, an identifier of a specific scenario, an environment, a channel feature, or a device that is related to the AI/ML, or an identifier of a function, feature, capability, or module that is related to the AI/ML. This is not specifically limited in this application.

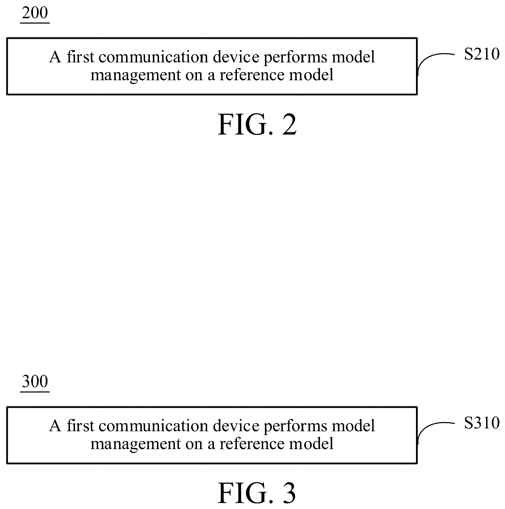

Based on this, FIG. 2 is a schematic flowchart of a model management method 200 according to an exemplary embodiment of this application. The method 200 may be performed by a first communication device, but is not limited thereto, and specifically, may be performed by hardware and/or software installed in the first communication device. In this embodiment, the method 200 may include at least the following steps.

S210: The first communication device performs model management on a reference model.

Considering different communication processes in the related art, various AI models may be deployed or configured in the first communication device. Even for a same communication process, a plurality of AI models with greatly varying performance, complexity, sizes, and the like may be configured, resulting in large difficulty in AI model management. Therefore, this application provides a reference model, and at least a part of model parameters (model parameter) or at least a part of model structures (model structure) of a target model are defined in the reference model, to directly determine, when the target model needs to be used or applied for performing a predetermined communication process, the target model corresponding to the predetermined communication process based on the reference model without deploying or configuring different AI models in the first communication device.

In other words, in this application, the reference model is defined for the predetermined communication process, thereby resolving a problem of large difficulty in AI model management in the related art through model management on the reference model, and improving model management efficiency.

In this case, if only a part of model parameters or a part of model structures of the target model are defined in the reference model, the target model may be generated based on the reference model and a feature related to the predetermined communication process. If all model parameters or all model structures of the target model are defined in the reference model, the reference model may be directly defined as the target model and used in the predetermined communication process. This is not limited in this embodiment.

It should be noted that, to ensure model performance of the target model, the reference model provided in this embodiment may be a simple model with a classic structure, stable performance, and good robustness. Alternatively, radio frequency/baseband measurement (such as RAN4) may be performed on the reference model, to cause that the target model determined based on the reference model can obtain good performance in the predetermined communication process.

Optionally, the reference model may have a plurality of model types. For example, the reference model may be a neural network, a decision tree, a support vector machine, a Bayes classifier, or the like. The neural network may be a fully-connected neural network, a convolutional neural network, a recursive neural network, an attention neural network, a transformer (Transformer) neural network, or the like, or a combination thereof. This is not limited herein.

In addition, in this embodiment, the model parameter or the model structure of the reference model configured or deployed in the first communication device may be agreed in a protocol, configured by a higher layer, negotiated among various manufacturers, or the like. This is not limited herein.

In some implementations, there may be a plurality of predetermined communication processes depending on different communication scenarios. For example, in this embodiment, the predetermined communication process may include, but is not limited to the following several types.
(a) Signal processing, including signal detection, filtering, balancing, and the like. A signal may include, but is not limited to, a demodulation reference signal (Demodulation Reference Signal, DMRS), a sounding reference signal (Sounding Reference Signal, SRS), a synchronization signal block (Synchronization Signal Block, SSB), a tracking reference signal (tracking reference signal, TRS), a phase-tracking reference signal (Phase-tracking reference signal, PTRS), a channel state information reference signal (Channel state information reference signal, CSI-RS), and the like.
(b) Signal transmission/reception/demodulation/sending. The signal includes a physical downlink control channel (Physical downlink control channel, PDCCH), a physical downlink shared channel (Physical downlink shared channel, PDSCH), a physical uplink control channel (Physical Uplink Control Channel, PUCCH), a physical uplink shared channel (Physical Uplink Shared Channel, PUSCH), a physical random access channel (Physical Random Access Channel, PRACH), a physical broadcast channel (Physical broadcast channel, PBCH), and the like.
(c) Channel state information obtaining.

For example, channel state information feedback. The channel state information includes channel-related information, channel matrix-related information, channel feature information, channel matrix feature information, a precoding matrix indicator (Precoding matrix indicator, PMI), a rank indicator (Rank indicator, RI), a CSI-RS resource indicator (CSI-RS Resource Indicator, CRI), a channel quality indicator (Channel quality indicator, CQI), a layer indicator (Layer Indicator, LI), and the like.

For another example, uplink and downlink partial reciprocity in frequency division duplex (Frequency Division Duplex, FDD). For an FDD system, according to the partial reciprocity, a base station obtains angle information and latency information through an uplink channel, the angle information and the latency information may be notified to a terminal through CSI-RS precoding or a direct indication, and then the terminal performs reporting based on the indication from the base station or performs selection within a range indicated by the base station and performs reporting, thereby reducing computational load and overheads for CSI reporting.
(d) Beam management, including, for example, beam measurement, beam reporting, beam prediction, beam failure detection, beam failure recovery, and a new beam indication in the beam failure recovery.
(e) Channel prediction, such as channel state information prediction or beam prediction.
(f) Interference suppression, such as intra-cell interference suppression, inter-cell interference suppression, out-of-band interference suppression, or cross-modulation interference suppression.
(g) Positioning. For example, positioning is performed through a specific location (including a horizontal location or a vertical location) or a possible future track of a terminal estimated from a reference signal (for example, SRS), or through information for assisting location estimation or track estimation.
(h) High-layer service and parameter prediction and management, such as prediction and management of a throughput, a size of required data packet, a service requirement, a movement speed, and noise information.
(i) Parsing of control signaling. The control signaling may be, but is not limited to, signaling related to power control, signaling related to beam management, and the like.

In this embodiment, the first communication device performs model management on the reference model, and the at least a part of model parameters or at least a part of model structures of the target model are defined in the reference model, where the target model is used by the first communication device for performing the predetermined communication process. Therefore, the target model for performing the predetermined communication process is managed through management on the reference model, which can resolve the problem of difficult AI model management, improve model management efficiency, and ensure communication performance.

FIG. 3 is a schematic flowchart of a model management method 300 according to an exemplary embodiment of this application. The method 300 may be performed by a first communication device, but is not limited thereto, and specifically, may be performed by hardware and/or software installed in the first communication device. In this embodiment, the method 300 may include at least the following steps.

S310: The first communication device performs model management on a reference model.

At least a part of model parameters or at least a part of model structures of a target model are defined in the reference model, and the target model is used by the first communication device for performing a predetermined communication process.

It may be understood that reference may be made to relevant descriptions in the foregoing method embodiment 200 for an implementation process of the method embodiment 300. In addition, in a possible implementation, the first communication device may perform model management on the reference model based on capability information of the first communication device in at least one of the following manner 1 and the following manner 2.

Manner 1: It is assumed that the reference model is classified into reference models of a plurality of levels. In other words, the first communication device supports a plurality of reference models of different levels. In this case, the first communication device may send device capability information to a second communication device, to indicate the levels (Level) of the reference models supported by the first communication device.

Optionally, in this embodiment, the device capability information includes at least one of the following (11) to (13).
(11) A highest level of the reference models supported by the first communication device.
(12) A lowest level of the reference models supported by the first communication device.
(13) All the levels of the reference models supported by the first communication device.

It should be noted that, when reporting the device capability information, the first communication device reports the highest level, the lowest level, or all the levels of the reference models supported by the first communication device, to enable the first communication device and the second communication device to have consistent understanding of the reference models supported by the first communication device, so that signaling overheads are reduced while the reference models are effectively managed.

For example, it is assumed that the reference models supported by the first communication device are classified into reference models of Level 0, Level 1, Level 2, and Level 3. In this case, if the first communication device reports that the first communication device supports Level 2, it indicates that the first communication device supports Level 0, Level 1, and Level 2. In other words, the first communication device needs to report only the highest level supported by the first communication device instead of reporting all the levels, thereby reducing the signaling overheads.

Alternatively, it indicates that the first communication device supports only Level 2. In other words, the first communication device needs to report all the levels supported by the first communication device.

Alternatively, it indicates that the first communication device supports Level 2 and Level 3. In other words, the first communication device needs to report the lowest level supported by the first communication device instead of reporting all the levels, thereby reducing the signaling overheads.

For another example, the first communication device reports that the first communication device supports Level 0 and Level 2, to indicate that the first communication device supports Level 0, Level 1, and Level 2. In other words, the first communication device needs to report the highest level and the lowest level that are supported by the first communication device instead of reporting all the levels, thereby reducing the signaling overheads.

Manner 2: The reference models supported by the first communication device are not reported to the second communication device when the first communication device supports an AI-enable feature (AI-enable feature). Correspondingly, when determining that the first communication device supports the AI-enable feature, the second communication device may determine by default that the first communication device supports the reference model. In this way, additional signaling interaction of capabilities related to the reference model can be avoided while the reference model is managed, thereby reducing the signaling overheads.

In some implementations, when performing the model management on the reference model, to ensure matching between the reference model and the predetermined communication process, in this embodiment, the first communication device may support update of the model parameter of the reference model (that is, the model structure of the reference model is not updated) and monitoring of model performance of the reference model.

For example, in a possible implementation, the first communication device may send first indication information to the second communication device, to indicate a model-related operation supported by the first communication device and performed based on the model parameter. Correspondingly, after receiving the first indication information, the second communication device may perform the model-related operation based on the model parameter, to implement the model management on the reference model, so that the signaling overheads can be effectively reduced. In this case, the model structure of the reference model is not changed, and only the model parameter is changed.

The model-related operation may include, but is not limited to, at least one of model update (model update), model delivery (model delivery), and model transfer (model transfer). It may be understood that the model transfer generally means that a model is transferred over an air interface, or the model is transferred based on 3GPP signaling or 3GPP visible signaling. The model delivery is a broad concept, and means that a model is delivered from a side to another side.

It should be noted that, when the model management is performed based on the model parameter, for example, the first communication device does not report supporting for the model structure of the reference model, that is, both the first communication device and the second communication device determine by default that the first communication device supports the model structure of the reference model.

For another example, in another possible implementation, the first communication device may alternatively perform performance monitoring (Performance monitoring) on the model performance of the reference model based on a target monitoring resource, or send a monitoring result of the model performance to the second communication device. In this way, the signaling overheads can be reduced and stability of communication performance can be ensured while the model management on the reference model is implemented.

When the performance monitoring is performed on the model, the target monitoring resource may be agreed in a protocol, configured by a higher layer, or configured by a network side. This is not limited herein. It is assumed that the target monitoring resource is configured by a network side device. In this case, regardless of whether the reference model is in an active (active) state or an inactive (inactive) state, the network side device needs to configure the target monitoring resource for the first communication device for the performance monitoring or reporting of the reference model.

In addition, if a non-reference model exists on the first communication device, the network side device may configure additional or more monitoring resources for performance monitoring or reporting of the non-reference model.

Certainly, in an implementation, when the model performance of the reference model is monitored, a performance monitoring indicator (performance monitoring KPI) or performance monitoring method (or mode or configuration) corresponding to the model performance may be a default value. In addition, the default value may be agreed in a protocol, or the default value may be determined by the first communication device and reported to the second communication device. This is not limited herein.

When the first communication device performs model management on the reference model, in addition to the foregoing management manner, in a possible implementation, the first communication device may alternatively perform effective management on the reference model in two aspects: model registration and model activation, to improve stability of a communication system while reducing the signaling overheads.

For example, the first communication device may perform model registration on the reference model in at least one of the following manner 1 to manner 3.

Manner 1: When a model identifier (model ID) of the reference model is agreed in a protocol, the first communication device skips performing a model registration process of the reference model, that is, the model identifier of the reference model is agreed in the protocol, and no additional model registration process is required, so that the signaling overheads can be effectively reduced.

It should be noted that the foregoing model identifier may be a logical model identifier (logical model ID), and when a non-reference model is also configured in the first communication device, the model identifier of the reference model is different from a model identifier of the non-reference model, to prevent the non-reference model from occupying the model identifier of the reference model.

In addition, an additional registration process is required for the non-reference model.

Manner 2: The model identifier of the reference model is different from the model identifier of the non-reference model, to prevent the non-reference model from occupying the model identifier of the reference model.

Manner 3: The first communication device initializes the model registration process of the reference model when one (or only one) reference model exists. The model registration process neither carries nor indicates the model identifier. In other words, when the first communication device supports only one reference model, although the model registration process needs to be performed, the reference model does not need the model identifier (for example, the logical model identifier). In this way, when signaling interaction related to the reference model is performed, the model identifier of the reference model may not be carried, thereby reducing the signaling overheads.

In this case, when received model-related information (or signaling related to the reference model) neither carries nor indicates the model identifier, the first communication device or the second communication device may determine a model indicated by the model-related information as the reference model, so that signaling overheads caused by the model identifier can be reduced while the reference model is indicated.

For another example, an implementation of performing model activation or use of the reference model by the first communication device may include: when at least one of (21) and (22) is satisfied, the first communication device may activate or use the reference model by default. In this way, activation of signaling transmission is avoided, to reduce the signaling overheads.
(21) The first communication device accesses a target cell, where the target cell is a cell of the first communication device after cell handover, or the target cell is an initial access cell of the first communication device.
(22) The first communication device falls back (Fallback) to a non-AI mode. "The first communication device falls back to a non-AI mode" may be understood as that a function/feature/module corresponding to the reference model falls back to the non-AI mode, or the function/feature/module corresponding to the reference model is run by using a non-AI algorithm or process.

In some implementations, the first communication device may alternatively perform model management on the reference model based on a model purpose, to ensure stability of the communication system. For example, when the reference model is used for model inference, the model inference needs to satisfy a predetermined requirement. It should be noted that, that the model inference needs to satisfy a predetermined requirement may mean that the model inference needs to satisfy the predetermined requirement in a typical scenario. However, the model inference may not satisfy the predetermined requirement in an atypical scenario.

Optionally, the foregoing "typical scenario" may be, but is not limited to, a scenario in a test case defined by RAN4, and may include a data set generated under a given parameter of a 3GPP channel model, a given field data set, and the like. Correspondingly, that the model inference satisfies a predetermined requirement may be that a performance indicator satisfying definition of RAN4 satisfies the predetermined requirement.

Correspondingly, the foregoing "atypical scenario" may be, but is not limited to, a scenario other than the typical scenario. This is not limited herein.

Exemplarily, in this application, that the model inference satisfies a predetermined requirement may include at least one of the following (31) to (35).
(31) An indicator related to a model inference result satisfies a first requirement. The model inference result may be a cosine similarity, a normalized mean square error (NMSE), or the like between a recovered channel and a to-be-compressed channel (or an input and an output of the model) in a CSI compression use case, or may be a cosine similarity, an NMSE, or the like between a predicted channel and an actual channel in a CSI prediction use case, or may be a beam prediction error, beam prediction accuracy, or the like in a beam management use case, or may be a location error, a positioning error, an error of positioning intermediate information (time of arrival (time of arrival, TOA), a time difference of arrival (time difference of arrival, TDOA), a line of sight (Line of Sight, LOS) delay, an angle of arrival (angle of arrival, AOA), and an angle of departure (AOD)), or the like in a positioning use case.
(32) System performance related to the model inference satisfies a second requirement. The system performance may be, but is not limited to, a system block error rate (Block Error Rate, BLER), a system throughput, and the like.
(33) An inference latency of the model inference satisfies a third requirement.
(34) Inference power consumption of the model inference satisfies a fourth requirement.
(35) A hardware indicator of the model inference satisfies a fifth requirement. The hardware indicator may include, but is not limited to, a memory size, computing power, complexity, and the like of a communication device (such as the first communication device) that uses the reference model to perform model inference.

It should be noted that, the foregoing first requirement, the second requirement, the third requirement, the fourth requirement, and the fifth requirement may be agreed in a protocol, configured by a higher layer, configured by a network side, or the like. This is not limited herein.

In this embodiment, life cycle management (life cycle management) is performed on the reference model in aspects such as device capability reporting, model transfer, model registration, model activation, and model performance monitoring. In this way, difficulty in model management can be reduced, efficient model management can be achieved, the signaling overheads can be reduced, and the stability of the communication system can be ensured.

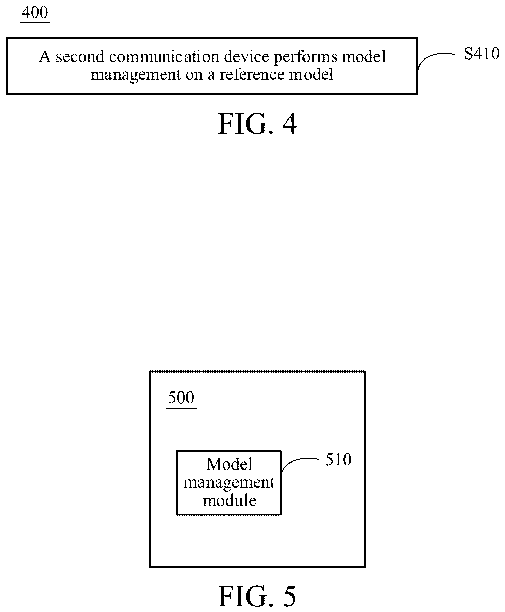

FIG. 4 is a schematic flowchart of a model management method 400 according to an exemplary embodiment of this application. The method 400 may be performed by a second communication device, but is not limited thereto, and specifically, may be performed by hardware and/or software installed in the second communication device. In this embodiment, the method 400 may include at least the following steps.

S410: The second communication device performs model management on a reference model.

The reference model is configured in a first communication device, at least a part of model parameters or at least a part of model structures of a target model are defined in the reference model, and the target model is used for performing a predetermined communication process.

Optionally, that the second communication device performs model management on a reference model includes any one of the following: receiving device capability information sent by the first communication device, where the device capability information is used for indicating a level of a reference model supported by the first communication device; and determining by default, when determining that the first communication device supports an AI-enable feature, that the first communication device supports the reference model.

Optionally, that the second communication device performs model management on a reference model includes at least one of the following: receiving first indication information sent by the first communication device, where the first indication information is used for indicating a model-related operation supported by the first communication device and performed based on a model parameter of the reference model, and the model-related operation includes at least one of model update, model delivery, and model transfer; and registering the reference model when receiving a model registration request corresponding to the reference model and sent by the first communication device, where a model registration process neither carries nor indicates a model identifier.

It may be understood that the various implementations of the model management method mentioned in this method embodiment 400 have the same or corresponding technical features as the model management methods mentioned in the foregoing method embodiments 200 and 300. Therefore, implementation processes of the various implementations of the model management method mentioned in this method embodiment 400 can refer to the relevant descriptions in the foregoing method embodiments 200 and 300, and the same or corresponding technical effects can be achieved. Details are not described herein again to avoid repetition.

The model management methods 200 to 400 provided in this the embodiments of this application may be performed by a model management apparatus. In an embodiment of this application, that the model management apparatus performs the model management method is taken as an example for description of the model management apparatus according to this embodiment of this application.

FIG. 5 is a schematic structural diagram of a model management apparatus 500 according to an embodiment of this application. The apparatus 500 includes a model management module 510, configured to perform model management on a reference model, where at least a part of model parameters or at least a part of model structures of a target model are defined in the reference model, and the target model is used by a first communication device for performing a predetermined communication process.

Optionally, the apparatus 500 may further include a model obtaining module, configured to obtain the reference model. The reference model may be determined through an indication by a network side device, agreement in a protocol, configuration by a higher layer, negotiation among various manufacturers, or the like. This is not limited herein.

Optionally, that the model management module 510 performs model management on the reference model includes at least one of the following: sending device capability information to a second communication device when the first communication device supports a plurality of reference models of different levels, where the device capability information is used for indicating the levels of the reference models supported by the first communication device; and skipping reporting, when the first communication device supports an AI-enable feature, the reference models supported by the first communication device to the second communication device.

Optionally, the device capability information includes at least one of the following: a highest level of the reference models supported by the first communication device; a lowest level of the reference models supported by the first communication device; and all the levels of the reference models supported by the first communication device.

Optionally, that the model management module 510 performs model management on the reference model includes: sending first indication information to the second communication device, where the first indication information is used for indicating a model-related operation supported by the first communication device and performed based on a model parameter, and the model-related operation includes at least one of model update, model delivery, and model transfer.

Optionally, that the model management module 510 performs model management on the reference model includes at least one of the following: skipping performing a model registration process of the reference model when a model identifier of the reference model is agreed in a protocol, where the model identifier of the reference model is different from a model identifier of a non-reference model; and initiating the model registration process of the reference model when one reference model exists, where the model registration process neither carries nor indicates the model identifier.

Optionally, the apparatus further includes: a determining module, configured to determine, after the first communication device initiates the model registration process of the reference model, when received model-related information neither carries nor indicates the model identifier, a model indicated by the model-related information as the reference model.

Optionally, that the model management module 510 performs model management on the reference model includes: activating or using, by the first communication device, the reference model when at least one of the following is satisfied: the first communication device accesses a target cell, where the target cell is a cell of the first communication device after cell handover, or the target cell is an initial access cell of the first communication device; and the first communication device falls back to a non-AI mode.

Optionally, when the reference model is used for model inference, the model inference satisfies a predetermined requirement.

Optionally, that the model inference satisfies a predetermined requirement includes at least one of the following: an indicator related to a model inference result satisfies a first requirement; system performance related to the model inference satisfies a second requirement; an inference latency of the model inference satisfies a third requirement; inference power consumption of the model inference satisfies a fourth requirement; and a hardware indicator of the model inference satisfies a fifth requirement.

Optionally, that the model management module 510 performs model management on the reference model includes at least one of the following: monitoring model performance of the reference model based on a target monitoring resource; and sending a monitoring result to the second communication device.

Optionally, a performance monitoring indicator or performance monitoring apparatus corresponding to the model performance is a default value; and the default value satisfies at least one of the following: being agreed in a protocol; and being determined by the first communication device and reported to the second communication device.

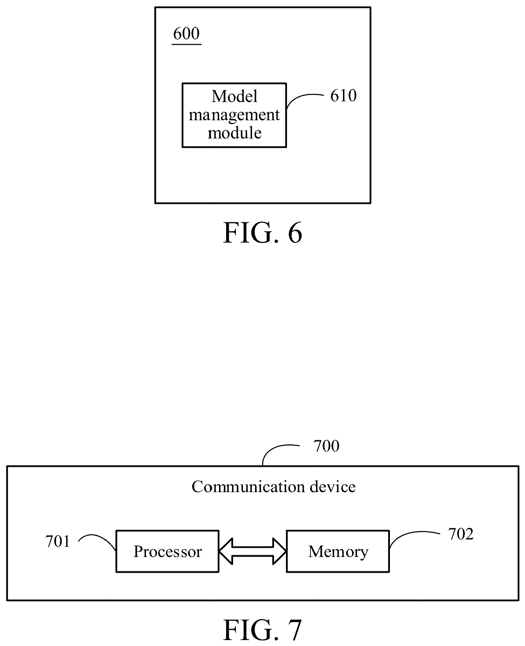

FIG. 6 is a schematic structural diagram of a model management apparatus 600 according to an embodiment of this application. The apparatus 600 includes a model management module 610, configured to perform model management on a reference model, where the reference model is configured in a first communication device, at least a part of model parameters or at least a part of model structures of a target model are defined in the reference model, and the target model is used for performing a predetermined communication process.

Optionally, the apparatus 600 further includes a sending module, configured to send information related to the reference model to the first communication device, where the information related to the reference model is used for the first communication device to configure or deploy the reference model.

Optionally, that the model management module 610 performs model management on the reference model includes any one of the following: receiving device capability information sent by the first communication device, where the device capability information is used for indicating a level of a reference model supported by the first communication device; and determining by default, when determining that the first communication device supports an AI-enable feature, that the first communication device supports the reference model.

Optionally, that the model management module 610 performs model management on a reference model includes at least one of the following: receiving first indication information sent by the first communication device, where the first indication information is used for indicating a model-related operation supported by the first communication device and performed based on a model parameter of the reference model, and the model-related operation includes at least one of model update, model delivery, and model transfer; and registering the reference model when receiving a model registration request corresponding to the reference model and sent by the first communication device, where a model registration process neither carries nor indicates a model identifier.

The model management apparatuses 500 and 600 in the embodiments of this application each may be an electronic device, for example, an electronic device with an operating system, or may be a component, for example, an integrated circuit or a chip, in an electronic device. The electronic device may be a terminal, or may be another device other than a terminal. Exemplarily, the terminal may include, but is not limited to the type of the terminal 11 listed above. The another device may be a server, a network attached storage (Network Attached Storage, NAS), or the like, which is not specifically limited in the embodiments of this application.

The model management apparatuses 500 and 600 according to the embodiments of this application can implement all processes implemented by the method embodiments shown in FIG. 2 to FIG. 4, and the same beneficial effects can be achieved. Details are not described herein again to avoid repetition.

As shown in FIG. 7, an embodiment of this application further provides a communication device 700, including a processor 701 and a memory 702. The memory 702 stores a program or instructions executable on the processor 701. For example, when the communication device 700 is a terminal, when the program or the instructions are executed by the processor 701, each step of the foregoing model management method embodiments is implemented, and the same technical effects can be achieved. When the communication device 700 is a network side device, when the program or the instructions are executed by the processor 701, each process of the foregoing model management method embodiments is implemented, and the same technical effects can be achieved. Details are not described herein again to avoid repetition.

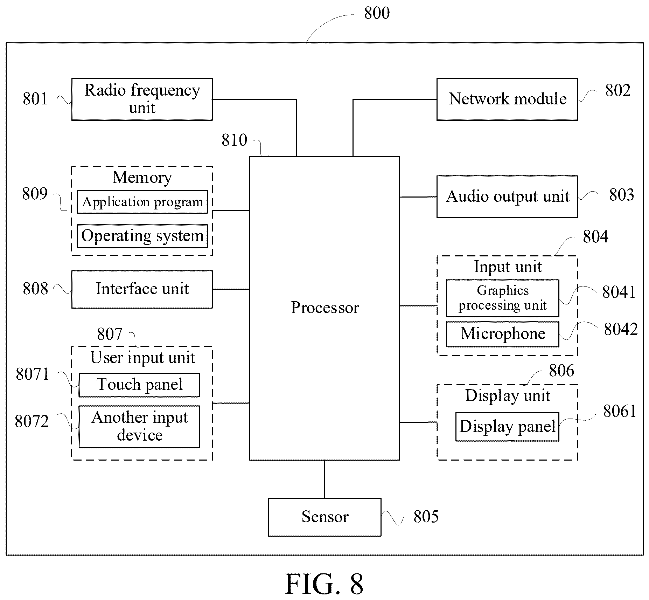

An embodiment of this application further provides a terminal, including a processor and a communication interface, where the communication interface is coupled to the processor, and the processor is configured to run a program or instructions, to implement the steps in the method embodiments shown in FIG. 2 to FIG. 4. The terminal embodiment corresponds to the foregoing terminal side method embodiment, each implementation process and implementation of the foregoing method embodiment is applicable to the terminal embodiment, and the same technical effects can be achieved. Specifically, FIG. 8 is a schematic diagram of a hardware structure of a terminal for implementing the embodiments of this application.

A terminal 800 includes, but is not limited to, at least a part of components of a radio frequency unit 801, a network module 802, an audio output unit 803, an input unit 804, a sensor 805, a display unit 806, a user input unit 807, an interface unit 808, a memory 809, a processor 810, and the like.

A person skilled in the art may understand that the terminal 800 may further include a power supply (such as a battery) for supplying power to the components. The power supply may be logically connected to the processor 810 by using a power management system, thereby implementing functions such as charging, discharging, and power consumption management by using the power management system. A terminal structure shown in FIG. 8 constitutes no limitation on the terminal, and the terminal may include more or fewer components than those shown in the figure, or some components may be combined, or a different component deployment may be used, which are not described herein again.

It should be understood that, in this embodiment of this application, the input unit 804 may include a GPU 8041 and a microphone 8042, and the graphics processing unit 8041 processes static pictures or video image data obtained by an image capturing device (such as a camera) in a video capturing mode or an image capturing mode. The display unit 806 may include a display panel 8061, and the display panel 8061 may be configured by using a liquid crystal display, an organic light-emitting diode, or the like. The user input unit 807 includes at least one of a touch panel 8071 and another input device 8072. The touch panel 8071 is also referred to as a touch screen. The touch panel 8071 may include two parts: a touch detection apparatus and a touch controller. The another input device 8072 may include, but is not limited to, a physical keyboard, a functional key (such as a volume control key or a switch key), a track ball, a mouse, and a joystick, which are not described herein again.

In this embodiment of this application, after receiving downlink data from a network side device, the radio frequency unit 801 transmits the downlink data to the processor 810 for processing; and additionally, the radio frequency unit 801 may send uplink data to the network side device. Generally, the radio frequency unit 801 includes, but is not limited to, an antenna, an amplifier, a transceiver, a coupler, a low noise amplifier, a duplexer, and the like.

The memory 809 may be configured to store a software program or instructions and various data. The memory 809 may mainly include a first storage area storing a program or instructions and a second storage area storing data, where the first storage area may store an operating system, an application program or instructions required by at least one function (such as a sound playing function or an image playing function), and the like. The memory 809 may include a volatile memory or a non-volatile memory. The non-volatile memory may be a read-only memory (ROM), a programmable read-only memory (PROM), an erasable programmable read-only memory (EPROM), an electrically erasable programmable read-only memory (EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), or a direct rambus random access memory (Direct Rambus RAM, DRRAM). The memory 809 in this embodiment of this application includes, but is not limited to, these memories and any other suitable types of memories.

The processor 810 may include one or more processing units. Optionally, the processor 810 integrates an application processor and a modem processor, where the application processor mainly processes an operation involving the operating system, the user interface, the application program, and the like, and the modem processor mainly processes a wireless communication signal, for example, a baseband processor. It may be understood that the foregoing modem processor may alternatively not be integrated into the processor 810.

The processor 810 is configured to perform model management on a reference model, where at least a part of model parameters or at least a part of model structures of a target model are defined in the reference model, and the target model is used by a first communication device for performing a predetermined communication process.

Optionally, that the processor 810 performs model management on the reference model includes at least one of the following: sending device capability information to a second communication device when the first communication device supports a plurality of reference models of different levels, where the device capability information is used for indicating the levels of the reference models supported by the first communication device; and skipping reporting, when the first communication device supports an AI-enable feature, the reference models supported by the first communication device to the second communication device.

Optionally, the device capability information includes at least one of the following: a highest level of the reference models supported by the first communication device; a lowest level of the reference models supported by the first communication device; and all the levels of the reference models supported by the first communication device.

Optionally, that the processor 810 performs model management on the reference model includes: sending first indication information to the second communication device, where the first indication information is used for indicating a model-related operation supported by the first communication device and performed based on a model parameter, and the model-related operation includes at least one of model update, model delivery, and model transfer.

Optionally, that the processor 810 performs model management on the reference model includes at least one of the following: skipping performing a model registration process of the reference model when a model identifier of the reference model is agreed in a protocol, where the model identifier of the reference model is different from a model identifier of a non-reference model; and initiating the model registration process of the reference model when one reference model exists, where the model registration process neither carries nor indicates the model identifier.

Optionally, the processor 810 is further configured to determine, when received model-related information neither carries nor indicates the model identifier, a model indicated by the model-related information as the reference model.

Optionally, that the processor 810 performs model management on the reference model includes: activating or using, by the first communication device, the reference model when at least one of the following is satisfied: the first communication device accesses a target cell, where the target cell is a cell of the first communication device after cell handover, or the target cell is an initial access cell of the first communication device; and the first communication device falls back to a non-AI mode.

Optionally, when the reference model is used for model inference, the model inference satisfies a predetermined requirement.

Optionally, that the model inference satisfies a predetermined requirement includes at least one of the following: an indicator related to a model inference result satisfies a first requirement; system performance related to the model inference satisfies a second requirement; an inference latency of the model inference satisfies a third requirement; inference power consumption of the model inference satisfies a fourth requirement; and a hardware indicator of the model inference satisfies a fifth requirement.

Optionally, that the processor 810 performs model management on the reference model includes at least one of the following: monitoring model performance of the reference model based on a target monitoring resource; and sending a monitoring result to the second communication device.

Optionally, a performance monitoring indicator or performance monitoring apparatus corresponding to the model performance is a default value; and the default value satisfies at least one of the following: being agreed in a protocol; and being determined by the first communication device and reported to the second communication device.

It may be understood that implementation processes of the various implementations mentioned in this embodiment can refer to the relevant descriptions in the method embodiments 200 to 400, and the same or corresponding technical effects can be achieved. Details are not described herein again to avoid repetition.

An embodiment of this application further provides a network side device, including a processor and a communication interface, where the communication interface is coupled to the processor, and the processor is configured to run a program or instructions, to implement the steps in the method embodiments shown in FIG. 2 to FIG. 4. The network side device embodiment corresponds to the foregoing network side device method embodiment, each implementation process and implementation of the foregoing method embodiment is applicable to the network side device embodiment, and the same technical effects can be achieved.

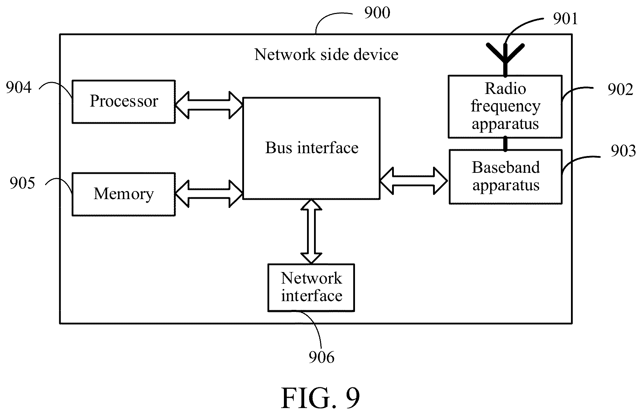

Specifically, an embodiment of this application further provides a network side device. As shown in FIG. 9, a network side device 900 includes: an antenna 901, a radio frequency apparatus 902, a baseband apparatus 903, a processor 904, and a memory 905. The antenna 901 is connected to the radio frequency apparatus 902. In an uplink direction, the radio frequency apparatus 902 receives information through the antenna 901 and sends the received information to the baseband apparatus 903 for processing. In a downlink direction, the baseband apparatus 903 processes the information to be sent and sends processed information to the radio frequency apparatus 902. The radio frequency apparatus 902 processes received information and sends processed received information out through the antenna 901.

The method performed by the network side device in the above embodiments may be implemented in the baseband apparatus 903, where the baseband apparatus 903 includes a baseband processor.

The baseband apparatus 903 may, for example, include at least one baseband board, where a plurality of chips are disposed on the baseband board. As shown in FIG. 9, one of the chips is, for example, the baseband processor, connected with the memory 905 through a bus interface to invoke a program in the memory 905 to perform network device operations shown in the above method embodiments.

The network side device may further include a network interface 906, and the interface is, for example, a common public radio interface (Common Public Radio Interface, CPRI).

Specifically, the network side device 900 of this embodiment of this application further includes: instructions or a program stored in the memory 905 and executable on the processor 904, and the processor 904 invokes the instructions or the program in the memory 905 to perform the method performed by the modules shown in FIG. 5 or FIG. 6, and the same technical effects can be achieved. Details are not described herein again to avoid repetition.

An embodiment of this application further provides a readable storage medium, storing a program or instructions, where when the program or the instructions are executed by a processor, each process of the foregoing model management method embodiments is implemented, and the same technical effects can be achieved. Details are not described herein again to avoid repetition.

The processor is the processor in the terminal described in the above embodiment. The readable storage medium includes a computer-readable storage medium, for example, a computer read-only memory ROM, a random access memory RAM, a magnetic disk, or an optical disk. In some examples, the readable storage medium may be a non-transitory readable storage medium.

An embodiment of this application additionally provides a chip, including a processor and a communication interface, where the communication interface is coupled to the processor, and the processor is configured to run a program or instructions to implement each process of the foregoing model management method embodiments, and the same technical effects can be achieved. Details are not described herein again to avoid repetition.

It should be understood that the chip mentioned in this embodiment of this application may also be referred to as a system-level chip, a system chip, a chip system, a system on chip, or the like.

An embodiment of this application additionally provides a computer program/program product, where the computer program/program product is stored in a storage medium, and the computer program/program product is executed by at least one processor to implement each process of the foregoing model management method embodiments, and the same technical effects can be achieved. Details are not described herein again to avoid repetition.

An embodiment of this application further provides a communication system, including a first communication device and a second communication device, where the first communication device may be configured to perform each process of the foregoing method embodiments 200 and 300, the second communication device may perform each process of the foregoing method embodiment 400, and the same technical effects can be achieved. Details are not described herein again to avoid repetition.

It should be noted that the term "comprise", "include" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the process, method, object, or apparatus. In addition, it is to be noted that, the scope of the method and apparatus in the embodiments of this application is not limited to performing the functions in the order shown or discussed, but may also include performing the functions in a substantially simultaneous manner or in a reverse order according to the functions involved, for example, the described method may be performed in a sequence different from the described order, and various steps may also be added, omitted, or combined. In addition, features described with reference to certain examples may be combined in other examples.

Based on the foregoing descriptions of the implementations, a person skilled in the art may clearly understand that the foregoing embodiment method may be implemented by a computer software product plus a necessary general hardware platform, or certainly may be implemented by hardware. The computer software product is stored in a storage medium (such as a ROM, a RAM, a magnetic disk, or a compact disc) and includes several instructions for instructing a terminal or a network side device to perform the methods described in the embodiments of this application.

The embodiments of this application are described above with reference to the accompanying drawings, but this application is not limited to the foregoing specific implementations, which are merely illustrative rather than limited. Under the inspiration of this application, a person of ordinary skill in the art can make implementations in many forms without departing from the scope of this application and the protection of the claims, and all the implementations fall within the protection of this application.

## Claims

1. A model management method, comprising:
performing, by a first communication device, model management on a reference model, wherein
at least a part of model parameters or at least a part of model structures of a target model are defined in the reference model, and the target model is used by the first communication device for performing a predetermined communication process.

2. The method according to claim 1, wherein the performing, by a first communication device, model management on a reference model comprises at least one of the following:
sending device capability information to a second communication device when the first communication device supports a plurality of reference models of different levels, wherein the device capability information is used for indicating the levels of the reference models supported by the first communication device; and
skipping reporting, when the first communication device supports an AI-enable feature, the reference models supported by the first communication device to the second communication device.

3. The method according to claim 2, wherein the device capability information comprises at least one of the following:
a highest level of the reference models supported by the first communication device;
a lowest level of the reference models supported by the first communication device; and
all the levels of the reference models supported by the first communication device.

4. The method according to any one of claims 1 to 3, wherein the performing, by a first communication device, model management on a reference model comprises:
sending first indication information to the second communication device, wherein the first indication information is used for indicating a model-related operation supported by the first communication device and performed based on a model parameter, and the model-related operation comprises at least one of model update, model delivery, and model transfer.

5. The method according to claim 1, wherein the performing, by a first communication device, model management on a reference model comprises at least one of the following:
skipping performing, by the first communication device, a model registration process of the reference model when a model identifier of the reference model is agreed in a protocol, wherein
the model identifier of the reference model is different from a model identifier of a non-reference model; and
initiating, by the first communication device, the model registration process of the reference model when one reference model exists, wherein the model registration process neither carries nor indicates the model identifier.

6. The method according to claim 5, wherein after the initiating, by the first communication device, the model registration process of the reference model, the method further comprises:
determining, when received model-related information neither carries nor indicates the model identifier, a model indicated by the model-related information as the reference model.

7. The method according to any one of claims 1 to 6, wherein the performing, by a first communication device, model management on a reference model comprises:
activating or using, by the first communication device, the reference model when at least one of the following is satisfied:
the first communication device accesses a target cell, wherein the target cell is a cell of the first communication device after cell handover, or the target cell is an initial access cell of the first communication device; and
the first communication device falls back to a non-AI mode.

8. The method according to any one of claims 1 to 7, wherein when the reference model is used for model inference, the model inference satisfies a predetermined requirement.

9. The method according to claim 8, wherein that the model inference satisfies a predetermined requirement comprises at least one of the following:
an indicator related to a model inference result satisfies a first requirement;
system performance related to the model inference satisfies a second requirement;
an inference latency of the model inference satisfies a third requirement;
inference power consumption of the model inference satisfies a fourth requirement; and
a hardware indicator of the model inference satisfies a fifth requirement.

10. The method according to any one of claims 1 to 9, wherein the performing, by a first communication device, model management on a reference model comprises at least one of the following:
monitoring model performance of the reference model based on a target monitoring resource; and
sending a monitoring result to the second communication device.

11. The method according to claim 10, wherein a performance monitoring indicator or performance monitoring method corresponding to the model performance is a default value; and
the default value satisfies at least one of the following:
being agreed in a protocol; and
being determined by the first communication device and reported to the second communication device.

12. A communication method, comprising:
performing, by a second communication device, model management on a reference model, wherein
the reference model is configured in a first communication device, at least a part of model parameters or at least a part of model structures of a target model are defined in the reference model, and the target model is used for performing a predetermined communication process.

13. The method according to claim 12, wherein the performing, by a second communication device, model management on a reference model comprises any one of the following:
receiving device capability information sent by the first communication device, wherein the device capability information is used for indicating a level of a reference model supported by the first communication device; and
determining by default, when determining that the first communication device supports an AI-enable feature, that the first communication device supports the reference model.

14. The method according to claim 12, wherein the performing, by a second communication device, model management on a reference model comprises at least one of the following:
receiving first indication information sent by the first communication device, wherein the first indication information is used for indicating a model-related operation supported by the first communication device and performed based on a model parameter of the reference model, and the model-related operation comprises at least one of model update, model delivery, and model transfer; and
registering the reference model when receiving a model registration request corresponding to the reference model and sent by the first communication device, wherein a model registration process neither carries nor indicates a model identifier.

15. A model management apparatus, comprising:
a model management module, configured to perform model management on a reference model, wherein
at least a part of model parameters or at least a part of model structures of a target model are defined in the reference model, and the target model is used by a first communication device for performing a predetermined communication process.

16. The apparatus according to claim 15, wherein that the model management module performs model management on the reference model comprises at least one of the following:
sending device capability information to a second communication device when the first communication device supports a plurality of reference models of different levels, wherein the device capability information is used for indicating the levels of the reference models supported by the first communication device; and
skipping reporting, when the first communication device supports an AI-enable feature, the reference models supported by the first communication device to the second communication device.

17. The apparatus according to claim 16, wherein the device capability information comprises at least one of the following:
a highest level of the reference models supported by the first communication device;
a lowest level of the reference models supported by the first communication device; and
all the levels of the reference models supported by the first communication device.

18. The apparatus according to any one of claims 15 to 17, wherein that the model management module performs model management on the reference model comprises:
sending first indication information to the second communication device, wherein the first indication information is used for indicating a model-related operation supported by the first communication device and performed based on a model parameter, and the model-related operation comprises at least one of model update, model delivery, and model transfer.

19. The apparatus according to claim 15, wherein that the model management module performs model management on the reference model comprises at least one of the following:
skipping performing a model registration process of the reference model when a model identifier of the reference model is agreed in a protocol, wherein
the model identifier of the reference model is different from a model identifier of a non-reference model; and
initiating the model registration process of the reference model when one reference model exists, wherein the model registration process neither carries nor indicates the model identifier.

20. The apparatus according to claim 19, further comprising:
a determining module, configured to determine, after the initiating, by the first communication device, the model registration process of the reference model, when received model-related information neither carries nor indicates the model identifier, a model indicated by the model-related information as the reference model.

21. The apparatus according to any one of claims 15 to 20, wherein that the model management module performs model management on the reference model comprises:
activating or using, by the first communication device, the reference model when at least one of the following is satisfied:
the first communication device accesses a target cell, wherein the target cell is a cell of the first communication device after cell handover, or the target cell is an initial access cell of the first communication device; and
the first communication device falls back to a non-AI mode.

22. The apparatus according to any one of claims 15 to 21, wherein when the reference model is used for model inference, the model inference satisfies a predetermined requirement.

23. The apparatus according to claim 22, wherein that the model inference satisfies a predetermined requirement comprises at least one of the following:
an indicator related to a model inference result satisfies a first requirement;
system performance related to the model inference satisfies a second requirement;
an inference latency of the model inference satisfies a third requirement;
inference power consumption of the model inference satisfies a fourth requirement; and
a hardware indicator of the model inference satisfies a fifth requirement.

24. The apparatus according to any one of claims 15 to 23, wherein that the model management module performs model management on the reference model comprises at least one of the following:
monitoring model performance of the reference model based on a target monitoring resource; and
sending a monitoring result to the second communication device.

25. The apparatus according to claim 24, wherein a performance monitoring indicator or performance monitoring apparatus corresponding to the model performance is a default value; and
the default value satisfies at least one of the following:
being agreed in a protocol; and
being determined by the first communication device and reported to the second communication device.

26. A model management apparatus, comprising:
a model management module, configured to perform model management on a reference model, wherein
the reference model is configured in a first communication device, at least a part of model parameters or at least a part of model structures of a target model are defined in the reference model, and the target model is used for performing a predetermined communication process.

27. The apparatus according to claim 26, wherein that the model management module performs model management on the reference model comprises any one of the following:
receiving device capability information sent by the first communication device, wherein the device capability information is used for indicating a level of a reference model supported by the first communication device; and
determining by default, when determining that the first communication device supports an AI-enable feature, that the first communication device supports the reference model.

28. The apparatus according to claim 26, wherein that the model management module performs model management on the reference model comprises at least one of the following:
receiving first indication information sent by the first communication device, wherein the first indication information is used for indicating a model-related operation supported by the first communication device and performed based on a model parameter of the reference model, and the model-related operation comprises at least one of model update, model delivery, and model transfer; and
registering the reference model when receiving a model registration request corresponding to the reference model and sent by the first communication device, wherein a model registration process neither carries nor indicates a model identifier.

29. A communication device, comprising a processor and a memory, wherein the memory stores a program or instructions executable on the processor, and when the program or the instructions are executed by the processor, the steps of the model management method according to any one of claims 1 to 11 are implemented, or the steps of the model management method according to any one of claims 12 to 14 are implemented.

30. A readable storage medium, wherein the readable storage medium stores a program or instructions, and when the program or the instructions are executed by a processor, the steps of the model management method according to any one of claims 1 to 11 are implemented, or the steps of the model management method according to any one of claims 12 to 14 are implemented.
